# EUROPÄISCHE PATENTSCHRIFT

(11) **EP 3 867 620 B1**
(45) Veröffentlichungstag und Bekanntmachung des Hinweises auf die Patenterteilung: **14.08.2024**
(21) Anmeldenummer: 19794121.4
(22) Anmeldetag: 21.10.2019
(51) Int. Cl.: G01M 17/007

(54) **ROLLENPRÜFSTAND UND VERFAHREN ZUM BETREIBEN EINES ROLLENPRÜFSTANDS**
ROLLER TEST STAND AND METHOD FOR OPERATING A ROLLER TEST STAND
BANC D'ESSAI À ROULEAUX ET PROCÉDÉ SERVANT À FAIRE FONCTIONNER UN BANC D'ESSAI À ROULEAUX

(30) Priorität: 19.10.2018 DE 102018217965
(43) Veröffentlichungstag der Anmeldung: 25.08.2021
(73) Patentinhaber: AIP GmbH & Co. KG, 87490 Haldenwang (DE)
(72) Erfinder: KNESTEL, Anton, 87496 Hopferbach (DE)
(74) Vertreter: MERH-IP Matias Erny Reichl Hoffmann Patentanwälte PartG mbB
(86) Internationale Anmeldenummer: PCT/EP2019/078562
(87) Internationale Veröffentlichungsnummer: WO 2020/079275

(56) Entgegenhaltungen:
- KR-A- 20130 114 322
- US-A1- 2012 323 417

## Beschreibung

Die vorliegende Erfindung betrifft einen Rollenprüfstand und ein Verfahren zum Betreiben eines Rollenprüfstands, insbesondere für zumindest teilweise elektrisch angetriebene Fahrzeuge.

Beispielsweise für die Zulassungsmessung werden Kraftfahrzeuge auf so genannten Rollenprüfständen betrieben. Der Rollenprüfstand hat dabei die Aufgabe die gleichen Lastzustände wie bei einem realen Fahrbetrieb zu erzeugen, wobei das Fahrzeug dabei ortsfest auf dem Prüfstand betrieben wird. Während einer Zyklusfahrt wird die Abgasmasse und deren Bestandteile erfasst, so dass am Ende des Tests eine Aussage über die Schadstoffe in Gramm pro Kilometer möglich ist. Auch die Kraftstoffmenge wird durch solche Prüfstände über die Kohlenstoffbilanz ermittelt.

Aus der EP 1 039 282 A1 ist ein Rollenprüfstand für Kraftfahrzeuge bekannt, wobei Laufrollen vorgesehen sind für jedes Rad einer Achse des zu prüfenden Fahrzeugs sowie mit einer elektrischen Maschine zum Antreiben und Verzögern der Laufrollen. Die Prüfstandelektrik wird über ein Netzteil mit dem Stromnetz verbunden, wobei das Netzteil beispielsweise eine Gleichspannung von 650 Volt erzeugt.

Aus dem Dokument KR 2013 0114322 A ist eine Testvorrichtung für ein elektrisches Zweirad sowie ein Teststeuerverfahren bekannt, um ein elektrisch angetriebenes Zweirad auf einem Rollenprüfstand zu messen. Die Testvorrichtung umfasst eine Kammer, eine Dynamometerbank, eine Steuereinheit, eine Kammersteuerung, einen Motortreiber und eine Steuervorrichtung.

Das Dokument US 2012/323417 A1 offenbart einen Leistungsprüfstand welcher sowohl einen Motorprüfstand, zum Testen eines Elektromotors, als auch ein Batterieprüfsystem umfasst. Durch die Bereitstellung einer einzigen Energieversorgungseinheit für beide Prüfsysteme (Motor- und Batterieprüfsystem) werden Ausrüstungskosten eingespart. Der Motorprüfstand umfasst einen mit einer Ausgangswelle eines Motors gekoppelten Dynamometer, eine Energieversorgungseinheit zum Zuführen von Energie zu dem Motor oder zum Dynamometer, eine Motorprüfschaltung sowie eine Batterielade- und Batterieentladeschaltung, die mit einer Fahrzeugbatterie verbunden ist.

Neuerdings kommen immer mehrteilelektrifizierte Fahrzeuge auf den Markt. Bei diesen können jedoch ebenfalls die abgegebenen Schadstoffgase bestimmt werden. Um reproduzierbare Ergebnisse zu bekommen, muss die Fahrzeugbatterie einen bestimmten Ladezustand aufweisen. Dies kann beispielsweise mit so genannten Batteriesimulatoren erreicht werden.

Es ist eine Aufgabe der vorliegenden Erfindung einen verbesserten Rollenprüfstand und ein verbessertes Verfahren zum Betreiben eines Rollenprüfstands bereitzustellen, mit dem ein einfaches und effizientes Prüfen von zumindest teilelektrischen Fahrzeugen ermöglicht wird.

Zur Lösung der Aufgabe werden die Merkmale der unabhängigen Ansprüche vorgeschlagen. Bevorzugte Weiterbildungen finden sich in den abhängigen Ansprüchen.

Gemäß einem Aspekt der Erfindung umfasst ein Rollenprüfstand für zumindest teilweise elektrische angetriebene Fahrzeuge zumindest eine (bevorzugt zwei oder vier) elektrische Maschine (bspw. Elektromotor) zum Antreiben oder Verzögern zumindest einer Laufrolle des Prüfstands. Bevorzugt sind vier Laufrollen vorgesehen, so dass jedes Rad eines Fahrzeugs mit einer eigenen Laufrolle kontaktiert werden kann. Die zumindest eine Laufrolle kann zum Kontaktieren der Räder des zu prüfenden Fahrzeugs vorgesehen sein, wobei auch eine Steuerungsvorrichtung vorgesehen sein kann. Die Steuerungsvorrichtung kann eine Antriebsversorgungseinheit und eine Leistungseinheit umfassen. Die Steuerungsvorrichtung kann beispielsweise zum Ansteuern und Energieversorgen des Rollenprüfstands ausgestaltet sein. Die Antriebsversorgungseinheit kann zum direkten Ansteuern der elektrischen Maschine vorgesehen sein. Zudem kann die Antriebsversorgungseinheit mit einem Versorgungsnetz verbunden sein, so dass die über das Versorgungsnetz bereitgestellte elektrische Energie über die Antriebsversorgungseinheit der elektrischen Maschine zugeführt werden kann. Das Versorgungsnetz kann beispielsweise ein öffentliches Stromnetz sein. Die Leistungseinheit kann mit zumindest einem Anschluss zum elektrischen Verbinden mit dem Fahrzeug kontaktierbar sein. Die Leistungseinheit kann somit die Versorgung mit elektrischer Energie eines Fahrzeugs ermöglichen, welches über einen Anschluss an die Leistungseinheit angeschlossen werden kann. Der Anschluss kann beispielsweise eine Stromzapfstelle bzw. eine Ladestation sein.

Erfindungsgemäß sind die Leistungseinheit und die Antriebsversorgungseinheit über einen gemeinsamen Zwischenkreis verbunden.

Der gemeinsame Zwischenkreis kann somit eine elektrische Verbindung zwischen der Leistungseinheit und der Antriebsversorgungseinheit herstellen. Durch diese erfindungsgemäße Ausgestaltung ist es möglich, die über das Versorgungsnetz eingespeiste elektrische Energie durch die Antriebsversorgungseinheit der elektrischen Maschine des Rollenprüfstands zum Antreiben der Laufrolle bereitzustellen und gleichzeitig durch die Verbindung mit dem gemeinsamen Zwischenkreis die Leistungseinheit zu versorgen, welche über den Anschluss (Zapfstelle) ein Laden und Entladen des Fahrzeugs und insbesondere der Fahrzeugbatterie ermöglicht. Vorteilhaft findet die Einspeisung aus dem Versorgungsnetz exklusiv über die Antriebsversorgungseinheit statt, welche mit dem gemeinsamen Zwischenkreis verbunden ist.

Die Leistungseinheit kann vorteilhaft ein Kopplungsglied zum galvanischen Entkoppeln der Leistungseinheit vom Zwischenkreis und/oder Versorgungsnetz umfassen. Das Kopplungsglied kann bevorzugt ein Transformator für eine galvanische Trennung sein. Durch diese vorteilhafte Ausgestaltung ist es möglich, eine Leistungseinheit bereitzustellen, welche ein effizientes und optimales Laden/Entladen des Fahrzeugs und/oder der Fahrzeugbatterie über den Anschluss ermöglicht und dabei Energie aus dem gemeinsamen Zwischenkreis abführt oder in den gemeinsamen Zwischenkreis einspeist. Vorteilhaft kann somit beispielsweise zum Laden der Fahrzeugbatterie elektrische Energie aus dem gemeinsamen Zwischenkreis von der Leistungseinheit gezapft werden, um diese über den Anschluss dem Fahrzeug und/oder der Fahrzeugbatterie zuzuführen. Beim Entladen der Fahrzeugbatterie oder des Fahrzeugs kann wiederum elektrische Energie über den Anschluss der Leistungseinheit zugeführt werden, welche damit den gemeinsamen Zwischenkreis speisen kann. Durch die galvanische Trennung mit dem Kopplungsglied ist es möglich, eine elektrische Leitung zwischen dem gemeinsamen Zwischenkreis und dem Anschluss zu vermeiden und dennoch Leistung zwischen diesen Stromkreisen auszutauschen. Die elektrische Leitung wird bei der galvanischen Trennung durch elektrisch nicht leitfähige Kopplungsglieder aufgetrennt, wobei bei galvanischer Trennung die elektrischen Potentiale voneinander getrennt und die Stromkreise dann untereinander potentialfrei sind. Mit anderen Worten ermöglicht das vorgesehene Kopplungsglied eine Trennung der Bezugspotentiale des gemeinsamen Zwischenkreises und des Anschlusses.

Erfindungsgemäß wird die Leistungseinheit über den gemeinsamen Zwischenkreis mit elektrischer Energie versorgt. Durch diese erfindungsgemäße Ausgestaltung ist es möglich, den mit der Antriebsversorgungseinheit verbundenen gemeinsamen Zwischenkreis für die Speisung der Leistungseinheit zu verwenden. Elektrische Energie, welche von der Antriebsversorgungseinheit aufgenommen wird, beispielsweise durch Energieaufnahme über die Bewegung der Laufrollen (welche von einem zu prüfenden Fahrzeug bewegt werden) kann in den gemeinsamen Zwischenkreis eingespeist werden, um wiederum über die Leistungseinheit zum Laden einer Fahrzeugbatterie oder eines Fahrzeugs verwendet werden zu können. Andererseits ist es somit auch möglich, Energie, die vom Fahrzeug oder der Fahrzeugbatterie über die Leistungseinheit abgezapft wird, dem gemeinsamen Zwischenkreis zuzuführen. Die Antriebsversorgungseinheit kann diese Energie aus dem gemeinsamen Zwischenkreis abzapfen und zum Antreiben der elektrischen Maschine verwenden. Durch die erfindungsgemäße bidirektionale Ausgestaltung ist es somit möglich, einen sehr energieeffizienten Rollenprüfstand bereitzustellen, mit dem eine optimale Energieverteilung erreicht wird. Besonders bevorzugt ist es somit möglich, dass lediglich minimale elektrische Energie aus dem Versorgungsnetz bezogen werden muss, um bspw. Reibungsverluste auszugleichen, wobei jedoch der Großteil der benötigten Energie über das Fahrzeug dem Rollenprüfstand zugeführt wird. Durch den parallelen Betrieb von Rollenprüfstand und Batterieladebetrieb kann somit eine optimale Energieeffizienz erreicht werden.

Die Leistungseinheit kann vorteilhaft eine Konditionierungseinheit sein zum Konditionieren einer Fahrzeugbatterie, so dass ein gewünschter Ladungszustand der Fahrzeugbatterie einstellbar ist. Daher kann das zu prüfende, zumindest teilweise elektrische angetriebene Fahrzeug (bzw. die Fahrzeugbatterie) in einem bestimmen elektrischen Ladezustand gebracht werden, um somit optimale Prüfungsbedingungen zu erzeugen.

Vorteilhaft kann die Leistungseinheit bidirektional ausgeführt sein, so dass über den Anschluss (bzw. der Zapfstelle) elektrische Energie einem Fahrzeug zugeführt und abgeführt werden kann. Die abgeführte elektrische Energie kann bevorzugt in den gemeinsamen Zwischenkreis eingespeist werden, zum Versorgen der elektrischen Maschine über die Antriebsversorgungseinheit. Die zugeführte elektrische Energie kann zudem bevorzugt aus dem gemeinsamen Zwischenkreis bezogen werden, unter Verwendung der (bidirektionalen) Leistungseinheit. Durch diese vorteilhafte Ausgestaltung ist es somit möglich, über den gemeinsamen Zwischenkreis Energie der elektrischen Maschine (mit der Antriebsversorgungseinheit) abzuführen oder zuzuführen und über die Leistungseinheit Energie dem Fahrzeug zuzuführen oder abzuführen, so dass über den gemeinsamen Zwischenkreis Energie der Leistungseinheit für die Antriebsversorgungseinheit bereitgestellt werden kann und umgekehrt.

Das Kopplungsglied kann vorteilhaft eine Eingangs-Transistorbrücke umfassen, welche mit dem gemeinsamen Zwischenkreis und mit einem Transformator verbunden ist. Das Kopplungsglied kann eine Ausgangs-Transistorbrücke umfassen, welche mit dem Transformator verbunden ist. Der Transformator kann vorteilhaft für eine galvanische Trennung vorgesehen sein. Vorteilhaft umfasst somit das Kopplungsglied der Leistungseinheit eine Eingangs-Transistorbrücke und eine Ausgangs-Transistorbrücke, welche mit dem Transformator verbunden sind. Dadurch ist ein Energiefluss in beide Richtungen möglich, wobei gleichzeitig die galvanische Trennung vom Netz sichergestellt werden kann.

Vorteilhaft kann die Eingangs-Transistorbrücke mit einer ersten Spule des Transformators verbunden sein und die Ausgangs-Transistorbrücke kann mit einer zweiten Spule des Transformators verbunden sein. Die Eingangs-Transistorbrücke kann mit einer ersten Seite des Transformators verbunden sein und die Ausgangs-Transistorbrücke kann mit einer zweiten Seite des Transformators verbunden sein, wobei bevorzugt die erste Seite der zweiten Seite gegenüberliegt. Die Eingangs-Transistorbrücke und Ausgangs-Transistorbrücke sind somit an unterschiedlichen Seiten des Transformators vorgesehen.

Vorteilhaft kann das Kopplungsglied an einer Eingangsseite mit dem gemeinsamen Zwischenkreis verbunden sein und an der Ausgangsseite mit einem Hoch-Tiefsetzsteller verbunden sein. Vorteilhaft ist der Hoch-Tiefsetzsteller eine Tiefsetzstellerbrücke. Daher ist es auch möglich, direkt einen Fahrzeugmotor, beispielsweise für Langzeittests über die Leistungseinheit mit Energie zu versorgen.

Der Hoch-Tiefsetzsteller kann elektrisch mit dem Anschluss in Verbindung stehen, so dass zum Speisen eines Fahrzeugs über den Anschluss eine elektrische Versorgung bereitgestellt wird.

Vorteilhaft kann zwischen dem Hoch-Tiefsetzsteller und dem Anschluss eine Glättungsdrossel (Speicherdrossel) und/oder ein Siebkondensator vorgesehen sein, um eine optimale Einspeisung des Stroms für die Batterie und/oder des Fahrzeugs zu gewährleisten.

Die Leistungseinheit kann zumindest zwei Kopplungsglieder aufweisen, welche parallel mit dem gemeinsamen Zwischenkreis verbunden sind. Durch entsprechende Schaltung der zumindest zwei Kopplungsglieder ist es möglich, beispielsweise die im gemeinsamen Zwischenkreis vorliegende Spannung zu erhöhen, um auch Fahrzeuge oder Batterien mit höheren Spannungen über die Leistungseinheit laden und/oder betreiben zu können.

Die Leistungseinheit kann vorteilhaft ein erstes Kopplungsglied mit einer ersten Eingangs-Transistorbrücke und ein zweites Kopplungsglied mit einer zweiten Eingangs-Transistorbrücke aufweisen. Die erste Eingangs-Transistorbrücke und die zweite Eingangs-Transistorbrücke können parallel mit dem gemeinsamen Zwischenkreis verbunden sein. Durch diese besonders vorteilhafte Schaltung der Kopplungsglieder lässt sich die Flexibilität der Leistungseinheit weiter erhöhen, so dass auch Fahrzeuge oder Batterien mit höheren Spannungen betrieben werden können. Beispielsweise ist somit eine Beschränkung auf eine 600 Volt Zwischenkreisversion des gemeinsamen Zwischenkreises optimiert, um auf einfache Weise auch Fahrzeuge oder Batterien mit höheren Spannungen zu betreiben.

Die Leistungseinheit kann vorteilhaft derart konfiguriert sein, dass beim Laden des Fahrzeugs die Eingangs-Transistorbrücke den Transformator speist und die Ausgangs-Transistorbrücke als aktiver Gleichrichter geschaltet ist und beim Entladen des Fahrzeugs die Ausgangs-Transistorbrücke als Wechselrichter geschaltet ist und die Eingangs-Transistorbrücke als Gleichrichter geschaltet ist.

Vorteilhaft kann die Leistungseinheit ein erstes Kopplungsglied umfassen, welches mit einem ersten Hoch-Tiefsetzsteller verbunden ist. Zudem kann die Leistungseinheit ein zweites Kopplungsglied umfassen, welches mit einem zweiten Hoch-Tiefsetzsteller verbunden ist. Der erste und der zweite Hoch-Tiefsetzsteller können parallel geschaltet sein zur Erhöhung eines Ausgangsstroms der Leistungseinheit. Durch diese vorteilhafte Ausgestaltung kann die Flexibilität und Genauigkeit der Leistungseinheit weiter erhöht werden. Zudem wird durch diese vorteilhafte Ausgestaltung auch eine möglichst energieeffiziente Leistungseinheit bereitgestellt.

Die Leistungseinheit kann ein erstes Kopplungsglied umfassen, welches mit einem ersten Hoch-Tiefsetzsteller verbunden ist und ein zweites Kopplungsglied, welches mit einem zweiten Hoch-Tiefsetzsteller verbunden ist. Der erste und zweite Hoch-Tiefsetzsteller können in Reihe geschaltet sein zur Erhöhung der Ausgangsspannung der Leistungseinheit. Durch diese vorteilhafte Ausgestaltung kann die Flexibilität und Effizienz der Leistungseinheit weiter verbessert werden.

Der Rollenprüfstand kann bevorzugt ein Allrad-Rollenprüfstand sein und zumindest zwei elektrische Maschinen aufweisen. Vorteilhaft kann der Rollenprüfstand vier elektrische Maschinen aufweisen, welche jeweils einer eigenen Laufrolle zugeordnet sind. Durch diese vorteilhafte Ausgestaltung wird ein Antreiben oder Verzögern jedes einzelnen Rads eines Fahrzeugs mit vier Rädern ermöglicht. Jede dieser elektrischen Maschinen kann vorteilhaft über die gemeinsame Antriebsversorgungseinheit mit Energie versorgt werden und auch Energie an die Antriebsversorgungseinheit abgeben, abhängig vom Prüfbetrieb des Fahrzeugs.

Vorteilhaft kann die Leistungseinheit im motorischen Betrieb des zu prüfenden Fahrzeugs als Spannungsquelle dienen und im generatorischen Betrieb des zu prüfenden Fahrzeugs als Spannungssenke dienen. Durch diese Ausgestaltung kann der Rollenprüfstand weiter optimal und flexibel ausgestaltet werden, um eine verbesserte Prüfung des Fahrzeugs zu ermöglichen.

Vorteilhaft kann die Antriebsversorgungseinheit ein bidirektionales Netzteil umfassen zur Verbindung mit dem Versorgungsnetz. Daher ist es möglich, über die Antriebsversorgungseinheit einerseits elektrische Energie aus dem Versorgungsnetz zu beziehen bzw. bei einem Energieüberschuss Energie an das Versorgungsnetz abzugeben.

Vorteilhaft kann der gemeinsame Zwischenkreis ein Gleichspannungszwischenkreis sein der mit Gleichstrom gespeist wird. Weiter vorteilhaft kann eine wärmeisolierende Umhausung vorgesehen sein, in der das zu prüfende Fahrzeug auf den Laufrollen positionierbar ist. Durch diese Umhausung kann somit ein Prüfraum gebildet werden, in dem beispielsweise klimatische Bedingungen simuliert werden können, um ein möglichst realitätsnahes Prüfen des Fahrzeugs zu ermöglichen.

Vorteilhaft kann die Leistungseinheit derart ausgestaltet sein, dass der Strom an einer Messstelle am gemeinsamen Zwischenkreis einen definierten Wert nicht übersteigt. Beispielsweise kann die Leistungseinheit einen Leistungsbegrenzer umfassen, der die Leistungsaufnahme der Leistungseinheit begrenzt.

Vorteilhaft können die Hoch-Tiefsetzsteller zur Stromerhöhung parallel zum gemeinsamen Zwischenkreis geschaltet sein.

Vorteilhaft kann eine Vielzahl von Kopplungsgliedern parallel am gemeinsamen Zwischenkreis betrieben werden wobei die Ausgänge der Leistungseinheit flexibel konfigurierbar sein können, sodass mehrere unabhängige Stromversorgungen (bspw. am Ausgang der Leistungseinheit) gebildet werden können.

Die Hoch-Tiefsetzsteller können vorteilhaft in Reihe geschaltet sein, zur Erhöhung der Ausgangsspannung größer als die Spannung im gemeinsamen Zwischenkreis, und wobei dazu bevorzugt alle (Dreilevel) Tiefsetzsteller betrieben werden.

Vorteilhaft kann die von der Leistungseinheit vom Fahrzeug abgeführte Energie in den gemeinsamen Zwischenkreis rückgespeist werden und die rückgespeiste Energie kann aus dem gemeinsamen Zwischenkreis über die Antriebsversorgungseinheit der elektrischen Maschine zuführbar sein sodass ein sehr effizienter Aufbau erreicht werden kann.

Vorteilhaft kann die Leistungseinheit beim Laden eines Fahrzeuges am Prüfstand Vorrang gewähren, sodass ein Netzteil des Rollenprüfstands (welches zur Versorgung mit elektrischer Energie aus dem Versorgungsnetz dient) nicht überlastet wird.

Besonders vorteilhaft kann der gemeinsame Zwischenkreis mit einer Spannung zwischen 550 V und 750 V betrieben werden.

Eine Steuerungsvorrichtung für einen Rollenprüfstand kann eine Antriebsversorgungseinheit und eine Leistungseinheit umfassen. Die Antriebsversorgungseinheit kann zum Ansteuern (Versorgen) einer elektrischen Maschine des Prüfstands vorgesehen sein und mit einem Versorgungsnetz verbindbar sein. Die Antriebsversorgungseinheit kann somit die elektrische Maschine des Rollenprüfstands ansteuern und mit Energie versorgen bzw. auch Energie von der elektrischen Maschine abführen (im generatorischen Betrieb der elektrischen Maschine). Die Leistungseinheit kann zumindest mit einem Anschluss (bzw. Zapfstelle) zum elektrischen Verbinden mit einem zu prüfenden Fahrzeug kontaktierbar sein. Die Leistungseinheit kann daher ein Laden bzw. Entladen des Fahrzeugs und/oder der Fahrzeugbatterie des zumindest teilweise elektrisch angetriebenen Fahrzeugs ermöglichen. Vorteilhaft ist die Leistungseinheit und die Antriebsversorgungseinheit über einen gemeinsamen Zwischenkreis verbunden. Durch die gemeinsame Verbindung mittels gemeinsamem Zwischenkreis ist es möglich, einen Ausgleich zwischen der Energieaufnahme/Energieabgabe der Antriebsversorgungseinheit an die elektrische Maschine und der Energieaufnahme/Energieabgabe der Leistungseinheit mit der Fahrzeugbatterie (oder dem Fahrzeug) zu ermöglichen. Die gesamte Systemleistung des Rollenprüfstands kann somit optimal verteilt werden, so dass die Verluste reduziert werden können.

Ein vorteilhaftes Verfahren zum Betreiben eines Rollenprüfstands kann den Schritt umfassen: Zuführen von elektrischer Energie im generatorischen Betrieb des Rollenprüfstands in den gemeinsamen Zwischenkreis. Bei einem (parallelen) Ladevorgang kann gleichzeitig elektrische Energie aus dem gemeinsamen Zwischenkreis in das Fahrzeug (Fahrzeugbatterie) gespeist werden.

Die Laufrolle kann in einem Schubbetrieb des Rollenprüfstands aufgenommene Energie in den gemeinsamen Zwischenkreis rückspeisen und die rückgespeiste Energie kann aus dem gemeinsamen Zwischenkreis weiter über die Leistungseinheit einem Fahrzeug zugeführt werden.

Die von der Leistungseinheit von einem Fahrzeug abgeführte Energie kann in dem gemeinsamen Zwischenkreis rückgespeist werden und die rückgespeiste Energie kann aus dem gemeinsamen Zwischenkreis über die Antriebsversorgungseinheit der elektrischen Maschine zugeführt werden.

Ein erfindungsgemäßes Verfahren zum Betreiben eines oben genannten Rollenprüfstands kann den Schritt umfassen: Paralleles Betreiben des Rollenprüfstands und dem Batterieladebetrieb, sodass die vom Rollenprüfstand (Laufrollen mit platziertem Fahrzeug) aufgenommene oder abgegebene elektrische Energie in den gemeinsamen Zwischenkreis gespeist werden kann oder vom gemeinsamen Zwischenkreis bezogen werden kann und dabei gleichzeitig die Fahrzeugbatterie (oder des Fahrzeugs) geladen oder entladen werden kann.

Ein erfindungsgemäßes Verfahren kann zudem derart konfiguriert sein, dass wenn das Fahrzeug von der Leistungseinheit gespeist wird, das Netzteil weniger ausgelastet ist (und daher kleiner ausgelegt werden kann) als die Antriebsversorgungseinheit und die Leistungseinheit, da das Netzteil nur die Verluste ausgleicht wobei der Hauptenergiekreislauf zwischen der Leistungseinheit, dem Fahrzeugmotor, der Laufrolle mit der elektrischen Maschine, die Frequenz-Umrichter und den gemeinsamen Zwischenkreis vorliegt.

Die Erfindung wird im Folgenden exemplarisch mit Bezug auf die beigefügten, schematischen Zeichnungen beschrieben. Es zeigen
- Fig. 1:: den Aufbau eines herkömmlichen Rollenprüfstands;
- Fig. 2:: den Aufbau eines erfindungsgemäßen Rollenprüfstands;
- Fig. 3:: ein Schaltungsbild einer Ausführungsform der vorliegenden Erfindung im Parallelbetrieb zur Erhöhung des Stroms;
- Fig. 4:: ein weiteres Schaltungsbild einer Ausführungsform der vorliegenden Erfindung in Reihenschaltung für eine Ausgangsspannung größer als die Zwischenspannung (es ist die Schaltung eines Dreilevel-Tiefsetzstellers gezeigt);

Im Folgenden werden verschiedene Beispiele der vorliegenden Erfindung detailliert unter Bezugnahme auf die Figuren beschrieben. Gleiche bzw. ähnliche Elemente in den Figuren werden hierbei mit gleichen Bezugszeichen bezeichnet. Die vorliegende Erfindung ist jedoch nicht auf die beschriebenen Beispiele begrenzt, sondern umfasst weitere Modifikationen von Merkmalen der beschriebenen Beispiele und Kombinationen von Merkmale verschiedener Beispiele im Rahmen des Schutzumfangs der unabhängigen Ansprüche.

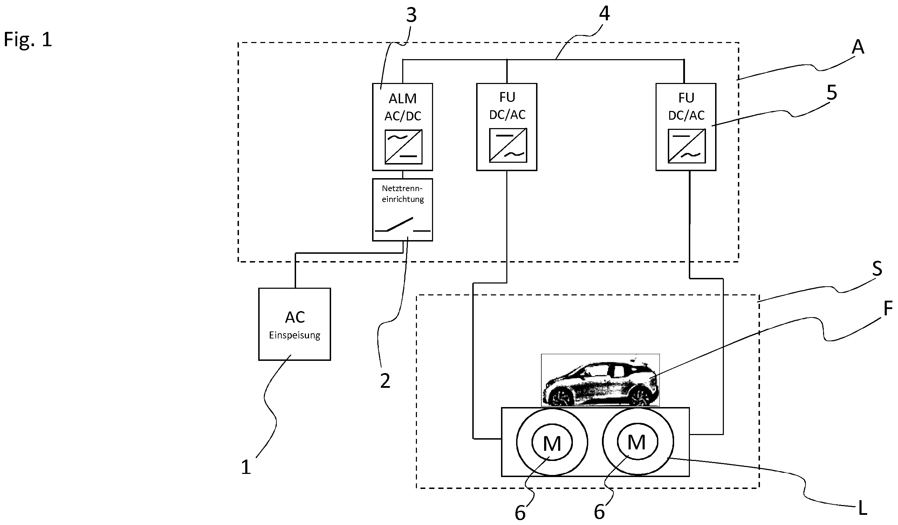

In Fig. 1 ist ein herkömmlicher Rollenprüfstand schematisch dargestellt. Über die Antriebsversorgungseinheit A wird die elektrische Versorgung der elektrischen Maschinen 6 des Prüfstands sichergestellt. Die elektrischen Maschinen 6 sind bspw. Elektromotoren, welche mit den jeweiligen Laufrollen L verbunden sind, um diese anzutreiben bzw. um im generatorischen Betrieb Energie abzuführen. Das Fahrzeug F wird für die Prüfung am Rollenprüfstand auf den Laufrollen L im Prüfraum S positioniert, um beispielsweise eine Zulassungsmessung für das Kraftfahrzeug durchzuführen. Dabei werden verschiedene Lastzustände wie im realen Fahrbetrieb über die Laufrollen L simuliert.

Zur Energieversorgung der Elektromotoren weist die Antriebsversorgungseinheit A eine Verbindung mit einer Netzteileinheit 1 auf. Wie in Fig. 1 dargestellt, wird die aus dem Versorgungsnetz entnommene Energie der Antriebsversorgungseinheit A über die Einspeisung zugeführt, wobei eine Netzteiltrenneinheit 2 vorgesehen ist, um einen getrennten oder verbundenen Zustand mit der AC Einspeisung zu bewirken. Über die Netzteileinheit 1, die Netzteiltrenneinheit 2 und ein Active Front End 3 (AFE oder AFM) wird der Zwischenkreis 4 gespeist. Die Frequenz-Umrichter 5 dienen zum Ansteuern und Versorgen der Antriebsmotoren (elektrische Maschine 6) des Rollenprüfstands. Das zu prüfende Fahrzeug kann dabei eine gleiche Last wie auf einer realen Straße vorfinden, um eine möglichst realitätsnahe Messung des Kraftfahrzeugs zu ermöglichen.

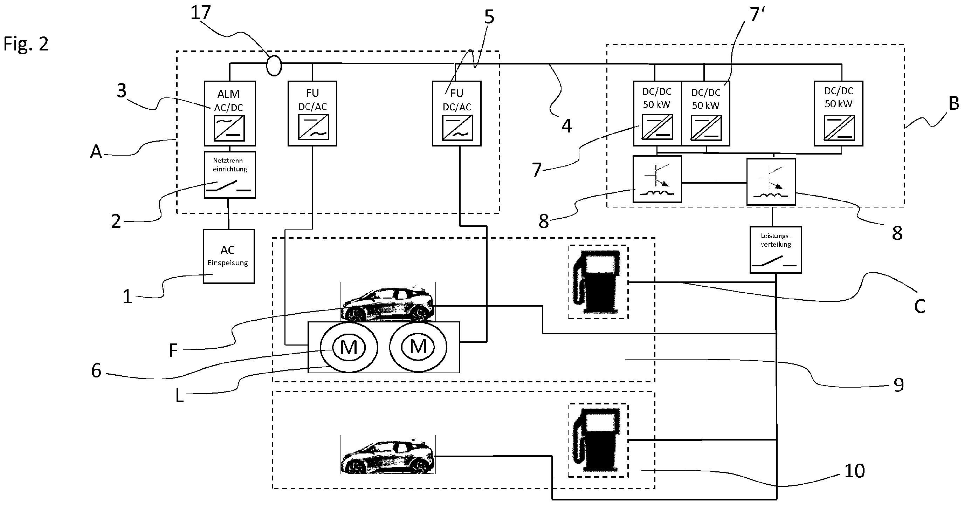

Fig. 2 zeigt den Aufbau des Rollenprüfstands gemäß der vorliegenden Erfindung. Die Versorgung der Antriebsmotoren des Rollenprüfstands erfolgt wiederum über die Netzteileinheit 1 und die Netzteiltrenneinheit 2 sowie über den AFE Umrichter 3 zur Speisung des Zwischenkreises 4. An dem Zwischenkreis 4 sind die Frequenz-Umrichter 5 angeschlossen (DC/AC), welche wiederum die Antriebsmotoren speisen (elektrische Maschine 6). Das Fahrzeug F ist dabei auf den Laufrollen L am Prüfstand positioniert zur Durchführung einer Zyklusfahrt, um beispielsweise Lastzustände, wie beim realen Fahrbetrieb zu simulieren.

Bevorzugt umfasst der Rollenprüfstand zumindest einen, weiter bevorzugt zwei oder vier, Antriebsmotoren (elektrische Maschine 6), welche separat voneinander von den Frequenzumrichtern 5 gespeist werden. Vorteilhaft ist im Prüfstand ein Anschluss C (Zapfstelle) vorgesehen zum Anschließen des Fahrzeugs oder der Fahrzeugbatterie. Über den Anschluss C kann die Fahrzeugbatterie des Fahrzeugs F geladen oder entladen werden. Die Fahrzeugbatterie kann eine Spannung von 48 Volt (Mildhybrid) oder 400 Volt oder sogar 800 Volt Gleichstrom betragen. Zum Laden oder Konditionieren oder Entleeren der Batterie müssen die Geräte eine galvanische Trennung vom Netz aufweisen. Erfindungsgemäß wird dabei der gemeinsame Zwischenkreis 4 des Prüfstands herangezogen. Über die Kopplungsglieder 7 der Leistungseinheit B kann eine galvanische Trennung vom Netz erreicht werden. Die Leistungseinheit B ist mit dem gemeinsamen Zwischenkreis 4 verbunden und wird von diesem gespeist. Die Leistungseinheit B dient zum Zuführen bzw. Abführen von Leistung, welche über die Anschlüsse C aufgenommen oder abgegeben wird. Die Leistungseinheit B kann somit zum Konditionieren der Fahrzeugbatterie des Fahrzeugs F verwendet werden.

Die Kopplungsglieder 7 sind zum galvanischen Entkoppeln der Leistungseinheit B vom gemeinsamen Zwischenkreis 4 vorgesehen, wobei die Kopplungsglieder 7 dazu jeweils einen Transformator für die galvanische Trennung aufweisen. Vorteilhaft ist die Leistungseinheit B bidirektional ausgeführt, so dass über den Anschluss C elektrische Energie an das Fahrzeug abgegeben sowie Energie vom Fahrzeug F aufgenommen werden kann. Zudem können auch mehrere Fahrzeuge gleichzeitig geladen werden. Die Leistungseinheit B weist zudem zumindest einen Hoch-Tiefsetzsteller 8 auf, der beispielsweise eine Stromzapfstelle in einem Prüfstandraum 9 oder in einem Vorbereitungsraum 10 speist. Die Leistungseinheit B weist vorteilhaft mehrere Kopplungsglieder 7, 7' auf, um ein optimales Konditionieren der Fahrzeugbatterie über den Anschluss C zu ermöglichen. Zudem weist die Leistungseinheit B eine Leistungsverteilung auf, um eine gewünschte Leistungsverteilung an die verschiedenen Stromzapfstellen zu erreichen. Wie in Figur 2 dargestellt, ist es zudem möglich den Ausgang der Leistungseinheit B direkt mit einem Fahrzeug F zu verbinden und mit Energie zu versorgen.

Erfindungsgemäß wird die Leistungseinheit B über den gemeinsamen Zwischenkreis 4 gespeist, der beispielsweise eine Gleichspannung von 650 Volt aufweist. Dieser gemeinsame Zwischenkreis ist gleichzeitig der Zwischenkreis des gesamten Rollenprüfstands. Über eine Wechselrichterbrücke wird ein Trafo gespeist und auf der Sekundärseite wieder gleichgerichtet. Der Wechsel- und Gleichrichter sind jeweils aktive Bauteile, so dass ein Energiefluss in beide Richtungen möglich ist. Daher ist die Leistungseinheit B bidirektional ausgeführt. Der Transformator erzeugt eine galvanisch getrennte Gleichspannung, beispielsweise ebenfalls 650 Volt DC. Diese Gleichspannung wird dann bevorzugt über einen Buck Boost Converter an die Fahrzeugbatterie angekoppelt. Daher können auch Batterien mit beispielsweise 48 Volt ge- und entladen werden, so dass der gewünschte State of Charge (SOC) der Batterie einstellbar ist. Durch diese Ausgestaltung kann aber auch der Fahrzeugmotor beispielsweise direkt gespeist werden, z. B. für Langzeittests.

Der Vorteil der erfindungsgemäßen Ausgestaltung besteht darin, dass nur die Energie, die durch den Wirkungsgrad des Aggregats verlorengeht, aus dem Netz bezogen werden muss. Diese von der Prüfstandrolle absorbierte Energie wird dabei in den Zwischenkreis rückgespeist und aus diesem dann über die galvanische Trennung und den Hoch-/Tiefsetzsteller dem Fahrzeugmotor oder der Batterie zugeführt. Umgekehrt kann im Schubbetrieb der Fahrzeugmotor oder die Batterie über die galvanische Trennung und dem Hoch-/Tiefsetzsteller in den Zwischenkreis 4 zurückspeisen, wobei dann diese Energie vom Prüfstandmotor aufgenommen wird. Somit wird beim erfindungsgemäßen Konzept die gesamte Energie über den Gleichspannungszwischenkreis (gemeinsamer Zwischenkreis 4) geführt, wobei nur die Verluste aus dem Netz zugespeist werden müssen.

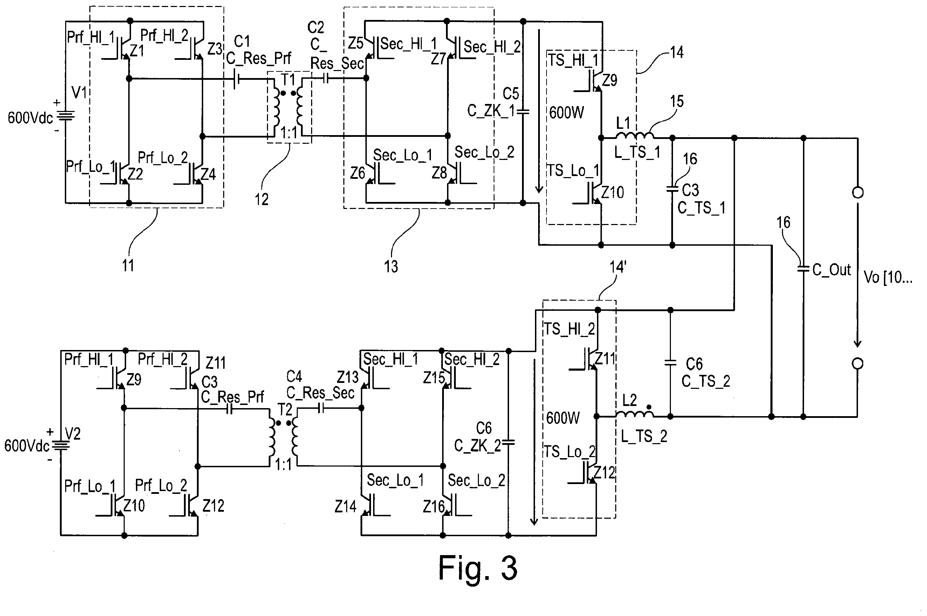

In Fig. 3 ist ein detaillierter Aufbau der Leistungsseite des Rollenprüfstands dargestellt. Ein erster bidirektionaler Wandler Bi1 und ein zweiter bidirektionaler Wandler Bi2 sind parallel an der Einspeisung vorgesehen. Den bidirektionalen Wandler Bi1 und Bi2 ist jeweils eine Tiefsetzsteller-Brücke nachgeordnet. Die über den gemeinsamen Zwischenkreis 4 gespeiste Leistungseinheit B führt die gewünschte Energie zu den Anschlüssen C, um ein Laden/Entladen der Fahrzeugbatterie oder des Fahrzeugs zu ermöglichen. Demgemäß sind beispielsweise zwei Eingangs-Transistorbrücken 11, 11' vorgesehen, welche mit dem gemeinsamen Zwischenkreis 4 an einer Eingangsseite verbunden sind. An einer Ausgangsseite der Eingangs-Transistorbrücken 11, 11', ist der Transformator 12 angeordnet für eine galvanische Trennung. Die in Fig. 3 dargestellten Stromquellen V1 und V2 werden vom gemeinsamen Zwischenkreis 4 gespeist. Die Transistorbrücke 11 (Z1-Z4) speist den Transformator T1, welcher ein Transformator 12 für die galvanische Trennung ist. Dem Transformator 12 nachgeordnet ist die Ausgangstransistorbrücke 13. Die Ausgangstransistorbrücke 13 ist ein aktiver Gleichrichter, wenn Energie vom Zwischenkreis in Richtung Batterie oder Fahrzeug fließt. Wenn in umgekehrter Richtung Energie in den gemeinsamen Zwischenkreis 4 fließt, ist die Ausgangs-Transistorbrücke 13 ein Wechselrichter und die Eingangs-Transistorbrücke 11 ein Gleichrichter.

Die Transistor-Halbbrücke Z9, Z10 ist beispielsweise ein Hoch-Tiefsetzsteller 14 und speist über eine Glättungsdrossel 15 und einen Siebkondensator 16 die Spannung bzw. den Strom für die Fahrzeugbatterie oder das Fahrzeug. Der Schaltungsaufbau umfassend die Eingangs-Transistorbrücke 11, den Transformator 12, die Ausgangs-Transistorbrücke 13, sowie den Hoch-Tiefsetzsteller 14 und die Glättungsdrossel und der Siebkondensator, findet sich in Fig. 3 nochmals im unteren Teil der Schaltung bei der Ausgangstransistorbrücke 13' und dem Hoch-Tiefsetzsteller 14', welche auch als zweite Ausgangs-Transistorbrücke 13' und zweite Hoch-Tiefsetzsteller 14' bezeichnet werden können. Somit werden zwei funktionsgleiche Schaltungen bereitgestellt (oberes Kopplungsglied und unteres Kopplungsglied), wobei die beiden Hoch-Tiefsetzsteller 14 und 14' parallel geschaltet sind, um höhere Ausgangsströme zu erzielen. Die maximale Ausgangsspannung ist kleiner als die Ausgangsspannung vor der galvanischen Trennung.

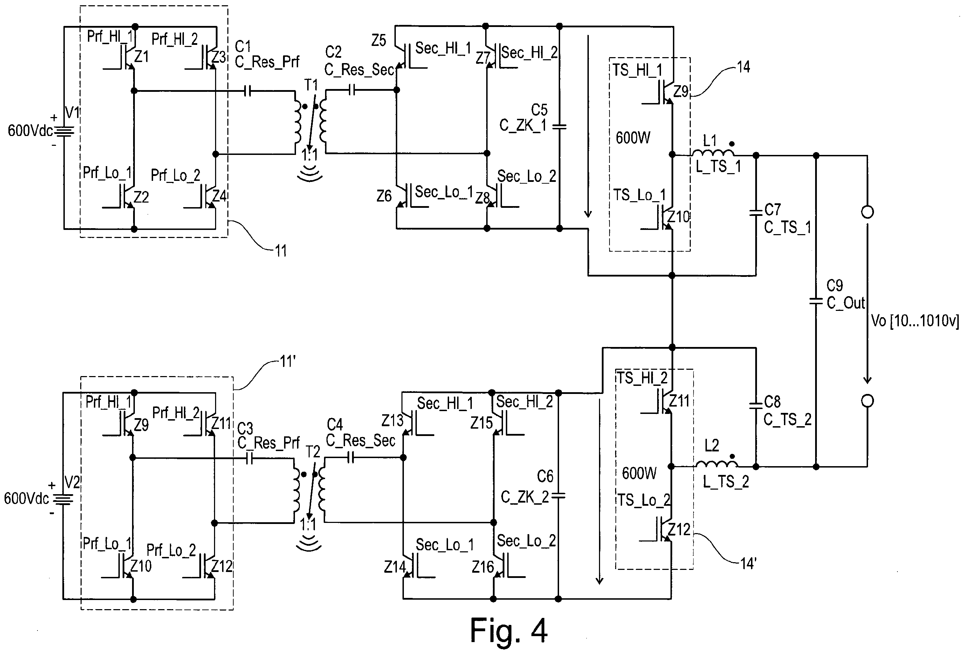

Eine weitere Ausführungsform ist in Fig. 4 dargestellt. Ähnlich wie in Fig. 3 sind zwei Kopplungsglieder vorgesehen, wobei der in Fig. 4 dargestellte Schaltungsaufbau es ermöglicht, den 650 Volt Zwischenkreis auch für Fahrzeuge oder Batterien mit höheren Spannungen zu betreiben. Die Eingangs-Transistorbrücken 11 und 11' sind mit dem gemeinsamen Zwischenkreis 4 parallel verbunden. Die beiden Hoch-Tiefsetzsteller 14 und 14' sind jedoch in Reihe geschaltet. Durch diese Schaltung ergibt sich somit ein Drei-Level-Tiefsetzsteller. Die Schaltglieder müssen somit nur noch die halbe Ausgangsspannung schalten.

Die maximale Ausgangsspannung ist hierbei die doppelte Spannung des gemeinsamen Zwischenkreises 4 kann jedoch vorteilhaft beispielsweise auf 1.000 Volt begrenzt werden. An der Einspeisung in den gemeinsamen Zwischenkreis 4 kann eine Strommessquelle 17 vorgesehen sein, die beispielsweise in Fig. 2 dargestellt ist. Durch einen parallelen Betrieb des Rollenprüfstands und des Batterieladebetriebs kann das Einspeisegerät wie der Active Front End Umrichter überlastet werden. In einer solchen Situation kann die Stromeinspeisung über die Hoch-Tiefsetzsteller so reduziert werden, dass an der Strommessstelle 17 der maximal mögliche Strom nicht überstiegen wird.

Gemäß des erfindungsgemäßen Rollenprüfstands kann die Energie im Prüfstand somit regenerativ verwendet werden. Daher kann die Energie des Fahrzeugs in den Zwischenkreis eingespeist werden und somit zum Laden der Batterie und/oder zur Rückspeisung ins Netz bereitstehen.

## Patentansprüche

1. Rollenprüfstand für zumindest teilweise elektrisch angetriebene Fahrzeuge (F) mit
- einer elektrischen Maschine (6) zum Antreiben oder Verzögern zumindest einer Laufrolle (L) des Rollenprüfstands, wobei die zumindest eine Laufrolle (L) zum Kontaktieren der Räder des zu prüfenden Fahrzeugs (F) vorgesehen ist; und
- einer Steuerungsvorrichtung die eine Antriebsversorgungseinheit (A) und eine Leistungseinheit (B) umfasst;
wobei die Antriebsversorgungseinheit (A) zum Ansteuern der elektrischen Maschine (6) vorgesehen ist und mit einem Versorgungsnetz in Verbindung steht, wobei die Leistungseinheit (B) mit zumindest einem Anschluss (C) zum elektrischen Verbinden mit dem Fahrzeug (F) kontaktierbar ist und wobei die Leistungseinheit (B) und die Antriebsversorgungseinheit (A) über einen gemeinsamen Zwischenkreis (4) verbunden sind, und die Leistungseinheit (B) über den gemeinsamen Zwischenkreis (4) versorgt wird, so dass eine vom Rollenprüfstand absorbierte Energie über die Leistungseinheit (B) einer Fahrzeugbatterie zugeführt werden kann oder umgekehrt die Fahrzeugbatterie Energie über die Antriebsversorgungseinheit (A) zum Antrieb einer elektrischen Maschine (6) des Rollenprüfstands zurückspeisen kann, so dass durch einen parallelen Betrieb von Rollenprüfstand und Fahrzeugbatterieladebetrieb eine optimale Energieeffizienz erreicht werden kann.

2. Rollenprüfstand nach Anspruch 1, wobei die Leistungseinheit (B) ein Kopplungsglied (7) zum galvanischen Entkoppeln der Leistungseinheit (B) vom Zwischenkreis (4) und/oder Versorgungsnetz umfasst und wobei das Kopplungsglied (7) bevorzugt einen Transformator (12) für eine galvanische Trennung umfasst.

3. Rollenprüfstand nach zumindest einem der vorhergehenden Ansprüche, wobei die Leistungseinheit (B) eine Konditionierungseinheit ist zum Konditionieren einer Fahrzeugbatterie, sodass ein Ladungszustand der Fahrzeugbatterie einstellbar ist.

4. Rollenprüfstand nach zumindest einem der vorhergehenden Ansprüche, wobei die Leistungseinheit (B) bidirektional ausgeführt ist, sodass über den Anschluss (C) elektrische Energie einem Fahrzeug zugeführt und abgeführt werden kann,
wobei die abgeführte elektrische Energie bevorzugt in den gemeinsamen Zwischenkreis (4) eingespeist wird, zum Versorgen der elektrischen Maschine (6) über die Antriebsversorgungseinheit (A); und
wobei die zugeführte elektrische Energie bevorzugt aus dem gemeinsamen Zwischenkreis (4) bezogen wird.

5. Rollenprüfstand nach zumindest einem der vorhergehenden Ansprüche 2 bis 4, wobei das Kopplungsglied (7) eine Eingangs-Transistorbrücke (11, 11') umfasst, welche mit dem gemeinsamen Zwischenkreis (4) und mit dem Transformator (12) verbunden ist, und das Kopplungsglied (7) eine Ausgangs-Transistorbrücke (13, 13') umfasst, welche mit dem Transformator (12) verbunden ist, und wobei die Eingangs-Transistorbrücke (11, 11') mit einer ersten Spule des Transformators (12) verbunden ist und die Ausgangs-Transistorbrücke (13, 13') mit einer zweiten Spule des Transformators (12) verbunden ist.

6. Rollenprüfstand nach zumindest einem der vorhergehenden Ansprüche 2 bis 5, wobei das Kopplungsglied (7) an einer Eingangsseite mit dem gemeinsamen Zwischenkreis (4) verbunden ist und an der Ausgangsseite mit mindestens einem Hoch-Tiefsetzsteller (14, 14') verbunden ist, wobei der Hoch-Tiefsetzsteller (14, 14') elektrisch mit dem Anschluss (C) in Verbindung steht sodass zum Speisen eines Fahrzeugs über den Anschluss (C) eine elektrische Versorgung bereitgestellt wird, und zwischen dem Hoch-Tiefsetzsteller (14, 14') und dem Anschluss (C) eine Glättungsdrossel und ein Siebkondensator (16) vorgesehen sind.

7. Rollenprüfstand nach zumindest einem der vorhergehenden Ansprüche 2 bis 6, wobei die Leistungseinheit (B) ein erstes Kopplungsglied (7) mit einer ersten Eingangs-Transistorbrücke (11) und ein zweites Kopplungsglied (7') mit einer zweiten Eingangs-Transistorbrücke (11') aufweist und die erste Eingangs-Transistorbrücke (11) und zweite Eingangs-Transistorbrücke (11') parallel mit dem gemeinsamen Zwischenkreis (4) verbunden sind.

8. Rollenprüfstand nach zumindest einem der vorhergehenden Ansprüche 5 bis 7, wobei die Leistungseinheit (B) derart konfiguriert ist, dass beim Laden des Fahrzeugs (F) die Eingangs-Transistorbrücke (11, 11') den Transformator (12) speist und die Ausgangs-Transistorbrücke (13, 13') als aktiver Gleichrichter geschaltet ist und beim Entladen des Fahrzeugs (F) die Ausgangs-Transistorbrücke (13, 13') als Wechselrichter geschaltet ist und die Eingangs-Transistorbrücke (11, 11') als Gleichrichter geschaltet ist.

9. Rollenprüfstand nach zumindest einem der vorhergehenden Ansprüche, wobei die Leistungseinheit (B) im motorischen Betrieb des zu prüfenden Fahrzeugs (F) als Spannungsquelle dient und im generatorischen Betrieb des zu prüfenden Fahrzeugs (F) als Spannungssenke dient.

10. Rollenprüfstand nach zumindest einem der vorhergehenden Ansprüche, wobei der gemeinsame Zwischenkreis (4) ein Gleichspannungszwischenkreis ist der mit Gleichstrom gespeist wird, und die Leistungseinheit (B) derart konfiguriert ist, dass der Strom an einer Messstelle (17) am gemeinsamen Zwischenkreis (4) einen definierten Wert nicht übersteigt.

11. Rollenprüfstand nach zumindest einem der vorhergehenden Ansprüche, wobei die Hoch-Tiefsetzsteller (14, 14') zur Stromerhöhung parallel zum gemeinsamen Zwischenkreis (4) geschaltet sind, und/oder die Hoch-Tiefsetzsteller (14, 14') in Reihe geschaltet sind, zur Erhöhung der Ausgangsspannung größer als die Spannung im gemeinsamen Zwischenkreis (4).

12. Verfahren zum Betreiben eines Rollenprüfstands nach zumindest einem der vorhergehenden Ansprüche 1 bis 11, wobei bei einem Entladevorgang des Fahrzeugs elektrische Energie über die Leistungseinheit (B) in den gemeinsamen Zwischenkreis (4) gespeist wird und bei einem Ladevorgang elektrische Energie aus dem gemeinsamen Zwischenkreis (4) in das Fahrzeug (F) gespeist wird und wobei die von der Laufrolle (L) in einem Schubbetrieb des Rollenprüfstands aufgenommene Energie in den gemeinsamen Zwischenkreis (4) rückgespeist wird und die rückgespeiste Enerie aus dem gemeinsamen Zwischenkreis (4) über die Leistungseinheit (B) einem Fahrzeug (F) zuführbar ist, und wobei die von der Leistungseinheit (B) einem Fahrzeug (F) zuführbar ist, und wobei die von der Leistungseinheit (B) vom Fahrzeug (F) abgeführte Energie in den gemeinsamen Zwischenkreis (4) rückgespeist wird und die rückgespeiste Energie aus dem gemeinsamen Zwischenkreis (4) über die Antriebseinheit (A) der elektrischen Maschine (6) zuführbar ist, so dass durch einen parallelen Betrieb von Rollenprüfstand und Fahrzeugbatterieladebetrieb eine optimale Energieeffizienz erreicht werden kann

13. Verfahren zum Betreiben eines Rollenprüfstands nach vorhergehendem Anspruch 12, wobei die Leistungseinheit (B) beim Laden eines Fahrzeuges (F) am Prüfstand Vorrang gewährt, sodass ein Netzteil (1) des Rollenprüfstands nicht überlastet wird, wobei, wenn das Fahrzeug von der Leistungseinheit (B) gespeist wird, das Netzteil (1) weniger ausgelastet ist als die Antriebsversorgungseinheit (A) und die Leistungseinheit (B), sodass das Netzteil kleiner ausgelegt werden kann, da das Netzteil (1) nur die Verluste ausgleicht wobei der Hauptenergiekreislauf zwischen der Leistungseinheit (B) , dem Fahrzeugmotor, der Laufrolle (L) mit der elektrischen Maschine (6), die Frequenz-Umrichter (5) und den gemeinsamen Zwischenkreis (4) vorliegt.

## Claims

1. Roller test stand for at least partially electrically driven vehicles (F), comprising
- an electric machine (6) for driving or decelerating at least one running roller (L) of the roller test stand, wherein the at least one running roller (L) is provided for contacting the wheels of the vehicle (F) to be tested; and
- a control device which comprises a drive supply unit (A) and a power unit (B);
wherein
the drive supply unit (A) is provided for controlling the electric machine (6) and is connected to a supply network, wherein the power unit (B) can be contacted by at least one connection (C) for electrical connection to the vehicle (F), and wherein the power unit (B) and the drive supply unit (A) are connected via a common intermediate circuit (4), and the power unit (B) is supplied via the common intermediate circuit (4), so that energy absorbed by the roller test stand can be supplied to a vehicle battery via the power unit (B) or, conversely, the vehicle battery can feed back energy via the drive supply unit (A) for driving an electric machine (6) of the roller test stand, so that optimum energy efficiency can be achieved by parallel operation of the roller test stand and vehicle battery charging operation.

2. Roller test stand according to Claim 1, wherein the power unit (B) comprises a coupling member (7) for galvanically decoupling the power unit (B) from the intermediate circuit (4) and/or supply network, and wherein the coupling member (7) preferably comprises a transformer (12) for galvanic isolation.

3. Roller test stand according to at least one of the preceding claims, wherein the power unit (B) is a conditioning unit for conditioning a vehicle battery, so that a state of charge of the vehicle battery can be set.

4. Roller test stand according to at least one of the preceding claims, wherein the power unit (B) is of bidirectional design, so that electrical energy can be supplied to a vehicle via the connection (C) and dissipated,
wherein the dissipated electrical energy is preferably fed into the common intermediate circuit (4) for supplying the electric machine (6) via the drive supply unit (A); and
wherein the supplied electrical energy is preferably drawn from the common intermediate circuit (4).

5. Roller test stand according to at least one of the preceding Claims 2 to 4, wherein the coupling member (7) comprises an input transistor bridge (11, 11') which is connected to the common intermediate circuit (4) and to the transformer (12), and the coupling member (7) comprises an output transistor bridge (13, 13') which is connected to the transformer (12), and wherein the input transistor bridge (11, 11') is connected to a first coil of the transformer (12) and the output transistor bridge (13, 13') is connected to a second coil of the transformer (12).

6. Roller test stand according to at least one of the preceding Claims 2 to 5, wherein the coupling member (7) is connected to the common intermediate circuit (4) on an input side and is connected to at least one boost-buck converter (14, 14') on the output side, wherein the boost-buck converter (14, 14') is electrically connected to the connection (C), so that an electrical supply is provided for feeding a vehicle via the connection (C), and a smoothing choke and a filter capacitor (16) are provided between the boost-buck converter (14, 14') and the connection (C).

7. Roller test stand according to at least one of the preceding Claims 2 to 6, wherein the power unit (B) has a first coupling member (7) with a first input transistor bridge (11) and a second coupling member (7') with a second input transistor bridge (11'), and the first input transistor bridge (11) and second input transistor bridge (11') are connected in parallel with the common intermediate circuit (4).

8. Roller test stand according to at least one of the preceding Claims 5 to 7, wherein the power unit (B) is configured in such a way that, when the vehicle (F) is being charged, the input transistor bridge (11, 11') feeds the transformer (12) and the output transistor bridge (13, 13') is connected as an active rectifier and, when the vehicle (F) is being discharged, the output transistor bridge (13, 13') is connected as an inverter and the input transistor bridge (11, 11') is connected as a rectifier.

9. Roller test stand according to at least one of the preceding claims, wherein the power unit (B) serves as a voltage source during motor operation of the vehicle (F) to be tested and serves as a voltage sink during generator operation of the vehicle (F) to be tested.

10. Roller test stand according to at least one of the preceding claims, wherein the common intermediate circuit (4) is a DC voltage intermediate circuit which is fed with DC current, and the power unit (B) is configured in such a way that the current at a measuring point (17) on the common intermediate circuit (4) does not exceed a defined value.

11. Roller test stand according to at least one of the preceding claims, wherein the boost-buck converters (14, 14') are connected in parallel with the common intermediate circuit (4) in order to increase the current, and/or the boost-buck converters (14, 14') are connected in series in order to increase the output voltage greater than the voltage in the common intermediate circuit (4).

12. Method for operating a roller test stand according to at least one of the precedingClaims 1 to 11, wherein, during a discharging operation of the vehicle, electrical energy is fed into the common intermediate circuit (4) via the power unit (B) and, during a charging operation, electrical energy is fed from the common intermediate circuit (4) into the vehicle (F), and wherein the energy absorbed by the running roller (L) in a thrust operation of the roller test stand is fed back into the common intermediate circuit (4) and the fed-back energy from the common intermediate circuit (4) can be supplied to a vehicle (F) via the power unit (B), and wherein the energy dissipated by the power unit (B) from the vehicle (F) is fed back into the common intermediate circuit (4) and the fed-back energy from the common intermediate circuit (4) can be supplied to the electric machine (6) via the drive unit (A), so that optimum energy efficiency can be achieved by parallel operation of the roller test stand and vehicle battery charging operation.

13. Method for operating a roller test stand according to preceding Claim 12, wherein the power unit (B) gives priority when a vehicle (F) is being charged on the test stand, so that a power supply unit (1) of the roller test stand is not overloaded, wherein, when the vehicle is fed by the power unit (B), the power supply unit (1) is less loaded than the drive supply unit (A) and the power unit (B), so that the power supply unit can be designed to be smaller, since the power supply unit (1) only compensates for the losses, wherein the main energy circuit is present between the power unit (B), the vehicle motor, the running roller (L) with the electric machine (6), the frequency converters (5) and the common intermediate circuit (4).

## Revendications

1. Banc d'essai à rouleaux pour des véhicules (F) au moins partiellement entraînés électriquement, comprenant
- une machine électrique (6) pour entraîner ou décélérer au moins un rouleau de roulement (L) du banc d'essai à rouleaux, l'au moins un rouleau de roulement (L) étant prévu pour entrer en contact avec les roues du véhicule (F) à tester ; et
- un dispositif de commande qui comprend une unité d'alimentation d'entraînement (A) et une unité de puissance (B) ;
dans lequel
l'unité d'alimentation d'entraînement (A) est prévue pour commander la machine électrique (6) et est en liaison avec un réseau d'alimentation, l'unité de puissance (B) pouvant être mise en contact avec au moins une borne (C) pour la liaison électrique avec le véhicule (F) et l'unité de puissance (B) et l'unité d'alimentation d'entraînement (A) étant reliées par l'intermédiaire d'un circuit intermédiaire commun (4), et l'unité de puissance (B) étant alimentée par l'intermédiaire du circuit intermédiaire commun (4), de telle sorte qu'une énergie absorbée par le banc d'essai à rouleaux puisse être acheminée par l'intermédiaire de l'unité de puissance (B) à une batterie de véhicule ou inversement la batterie de véhicule puisse réinjecter de l'énergie par l'intermédiaire de l'unité d'alimentation d'entraînement (A) pour entraîner une machine électrique (6) du banc d'essai à rouleaux, de telle sorte qu'un rendement énergétique optimal puisse être obtenu par un fonctionnement parallèle du banc d'essai à rouleaux et du mode de charge de batterie de véhicule.

2. Banc d'essai à rouleaux selon la revendication 1, dans lequel l'unité de puissance (B) comprend un organe de couplage (7) pour le découplage galvanique de l'unité de puissance (B) du circuit intermédiaire (4) et/ou du réseau d'alimentation et dans lequel l'organe de couplage (7) comprend de préférence un transformateur (12) pour une séparation galvanique.

3. Banc d'essai à rouleaux selon au moins l'une quelconque des revendications précédentes, dans lequel l'unité de puissance (B) est une unité de conditionnement pour conditionner une batterie de véhicule, de telle sorte qu'un état de charge de la batterie de véhicule puisse être réglé.

4. Banc d'essai à rouleaux selon au moins l'une quelconque des revendications précédentes, dans lequel l'unité de puissance (B) est réalisée de manière bidirectionnelle, de telle sorte que de l'énergie électrique puisse être acheminée par l'intermédiaire de la borne (C) à un véhicule et évacuée,
l'énergie électrique évacuée étant injectée de préférence dans le circuit intermédiaire commun (4) pour alimenter la machine électrique (6) par l'intermédiaire de l'unité d'alimentation d'entraînement (A) ; et
l'énergie électrique acheminée étant prélevée de préférence à partir du circuit intermédiaire commun (4).

5. Banc d'essai à rouleaux selon au moins l'une quelconque des revendications 2 à 4, dans lequel l'organe de couplage (7) comprend un pont de transistor d'entrée (11, 11') qui est connecté au circuit intermédiaire commun (4) et au transformateur (12), et l'organe de couplage (7) comprend un pont de transistor de sortie (13, 13') qui est connecté au transformateur (12), et dans lequel le pont de transistor d'entrée (11, 11') est connecté à une première bobine du transformateur (12) et le pont de transistor de sortie (13, 13') est connecté à une deuxième bobine du transformateur (12).

6. Banc d'essai à rouleaux selon au moins l'une quelconque des revendications 2 à 5, dans lequel l'organe de couplage (7) est connecté au niveau d'un côté d'entrée au circuit intermédiaire commun (4) et est connecté au niveau du côté de sortie à au moins un convertisseur élévateur-abaisseur (14, 14'), le convertisseur élévateur-abaisseur (14, 14') étant en liaison électrique avec la borne (C) de telle sorte qu'une alimentation électrique soit fournie pour l'alimentation d'un véhicule par l'intermédiaire de la borne (C), et une inductance de lissage et un condensateur de filtrage (16) étant prévus entre le convertisseur élévateur-abaisseur (14, 14') et la borne (C).

7. Banc d'essai à rouleaux selon au moins l'une quelconque des revendications 2 à 6, dans lequel l'unité de puissance (B) présente un premier organe de couplage (7) avec un premier pont de transistor d'entrée (11) et un deuxième organe de couplage (7') avec un deuxième pont de transistor d'entrée (11') et le premier pont de transistor d'entrée (11) et le deuxième pont de transistor d'entrée (11') sont connectés en parallèle au circuit intermédiaire commun (4).

8. Banc d'essai à rouleaux selon au moins l'une quelconque des revendications 5 à 7, dans lequel l'unité de puissance (B) est configurée de telle sorte que lors de la charge du véhicule (F), le pont de transistor d'entrée (11, 11') alimente le transformateur (12) et le pont de transistor de sortie (13, 13') est commuté en tant que redresseur actif et lors de la décharge du véhicule (F), le pont de transistor de sortie (13, 13') est commuté en tant qu'onduleur et le pont de transistor d'entrée (11, 11') est commuté en tant que redresseur.

9. Banc d'essai à rouleaux selon au moins l'une quelconque des revendications précédentes, dans lequel l'unité de puissance (B) sert de source de tension dans le fonctionnement motorisé du véhicule (F) à tester et sert de puits de tension dans le fonctionnement générateur du véhicule (F) à tester.

10. Banc d'essai à rouleaux selon au moins l'une quelconque des revendications précédentes, dans lequel le circuit intermédiaire commun (4) est un circuit intermédiaire à tension continue qui est alimenté en courant continu, et l'unité de puissance (B) est configurée de telle sorte que le courant au niveau d'un point de mesure (17) au niveau du circuit intermédiaire commun (4) ne dépasse pas une valeur définie.

11. Banc d'essai à rouleaux selon au moins l'une quelconque des revendications précédentes, dans lequel les convertisseurs élévateurs-abaisseurs (14, 14') sont commutés en parallèle au circuit intermédiaire commun (4) pour l'augmentation du courant, et/ou les convertisseurs élévateurs-abaisseurs (14, 14') sont commutés en série pour l'augmentation de la tension de sortie supérieure à la tension dans le circuit intermédiaire commun (4).

12. Procédé pour faire fonctionner un banc d'essai à rouleaux selon au moins l'une quelconque des revendications 1 à 11 précédentes, dans lequel lors d'une opération de décharge du véhicule, de l'énergie électrique est alimentée par l'intermédiaire de l'unité de puissance (B) dans le circuit intermédiaire commun (4) et lors d'une opération de charge, de l'énergie électrique est alimentée à partir du circuit intermédiaire commun (4) dans le véhicule (F) et l'énergie absorbée par le rouleau de roulement (L) dans un mode de poussée du banc d'essai à rouleaux est réinjectée dans le circuit intermédiaire commun (4) et l'énergie réinjectée peut être acheminée à partir du circuit intermédiaire commun (4) par l'intermédiaire de l'unité de puissance (B) à un véhicule (F), et l'énergie pouvant être acheminée par l'unité de puissance (B) à un véhicule (F), et l'énergie évacuée par l'unité de puissance (B) du véhicule (F) étant réinjectée dans le circuit intermédiaire commun (4) et l'énergie réinjectée pouvant être acheminée à partir du circuit intermédiaire commun (4) par l'intermédiaire de l'unité d'entraînement (A) à la machine électrique (6), de telle sorte qu'un rendement énergétique optimal puisse être obtenu par un fonctionnement parallèle du banc d'essai à rouleaux et du mode de charge de batterie de véhicule,

13. Procédé pour faire fonctionner un banc d'essai à rouleaux selon la revendication 12 précédente, dans lequel l'unité de puissance (B) accorde la priorité lors de la charge d'un véhicule (F) au niveau du banc d'essai, de telle sorte qu'un bloc d'alimentation (1) du banc d'essai à rouleaux ne soit pas surchargé, dans lequel, lorsque le véhicule est alimenté par l'unité de puissance (B), le bloc d'alimentation (1) est moins chargé que l'unité d'alimentation d'entraînement (A) et l'unité de puissance (B), de telle sorte que le bloc d'alimentation puisse être dimensionné plus petit, car le bloc d'alimentation (1) ne compense que les pertes, le circuit d'énergie principal étant présent entre l'unité de puissance (B), le moteur de véhicule, le rouleau de roulement (L) avec la machine électrique (6), les convertisseurs de fréquence (5) et le circuit intermédiaire commun (4).
